(19) **Europäisches Patentamt**
**European Patent Office**
**Office européen des brevets**

(11) **EP 2 169 939 A1**

(12) **EUROPEAN PATENT APPLICATION**

(43) Date of publication:
**31.03.2010 Bulletin 2010/13**

(51) Int Cl.:
*H04N 1/32* *(2006.01)*          *G06T 5/00* *(2006.01)*

(21) Application number: **09178176.5**

(22) Date of filing: **08.05.2007**

(84) Designated Contracting States:
**DE FR GB**

(30) Priority: **18.05.2006 US 801527 P**

(62) Document number(s) of the earlier application(s) in
accordance with Art. 76 EPC:
**07809050.3 / 2 018 766**

(71) Applicant: **Thomson Licensing**
**92443 Issy-les-Moulineaux Cedex (FR)**

(72) Inventors:
• **Zhou, Dekun**
**Princeton, NJ 08540 (US)**

• **Tian, Jun**
**Edison, NJ 08817 (US)**
• **Zhai, Jiefu**
**Plainsboro, NJ 08536 (US)**
• **Bloom, Jeffrey Adam**
**West Windsor, NJ 08550 (US)**
• **Llach, Joan**
**Princeton, NJ 08540 (US)**

(74) Representative: **Lindemann, Robert**
**Deutsche Thomson OHG**
**European Patent Operations**
**Karl-Wiechert-Allee 74**
**30625 Hannover (DE)**

(54) **Data hiding technique**

(57)     Information available at a decoder is embedded into image content after decoding of said image content by a first decoder, representing that information by at least one film grain pattern and then blending that at least one film grain pattern with the decoded image content. Such image content is typically in the form of a movie and examples of the information to be embedded include identification of the specific decoding device, the user of the decoding device, the time and date of decoding, the model number of the device, the versions of software running on the device, the status of the device or connections to the device, the contents of device registers or memory locations within the device, among many other possible data. When an unauthorized copy of image content is discovered, the copied image content undergoes a comparison to the decoded image content to generate difference data. Thereafter, the difference data undergoes comparison with a database of film grain patterns to recover the embedded data.

EP 2 169 939 A1

**Description**

CROSS-REFERENCE TO RELATED APPLICATIONS

This application claims priority under 35 U.S.C. 119(e) to U.S. Provisional Patent Application Serial No 60/801,527, filed May 18, 2006, the teachings of which are incorporated herein.

TECHNICAL FIELD

This invention relates to a technique for blending at least one specific pattern of film grain with image content to provide a mechanism for generating multiple copies of such content that are perceptually similar and yet individually distinguishable.

BACKGROUND ART

The growing proliferation of image content distributed in digital form, (e.g., still image, motion image sequence, video) and the relative ease by which unauthorized distribution can occur, has prompted the need to provide a forensic marking of the content specific to the some aspect of the authorized distribution channel. Such marking of the image content enables the original content owner or their agent to analyze the unauthorized copies of the content to recover the embedded information and from it, learn information about the unauthorized action that produced it.

Currently, providers of image content, such as movie studios, have begun experimenting with delivering image content over the Internet. Eventually, the Internet will become a major distribution channel for image content. Due to the bandwidth needed to deliver high quality image content, distribution of such content to more than a small number of individual subscribers across a plurality of corresponding dedicated channels will likely prove impractical. Therefore, other distribution techniques, such as multicasting and Peer-to-Peer (P2P) networking will predominate. Distribution techniques such as these serve to broadcast the same content to all subscribers, precluding the ability to distinguish forensically different copies of the same content. Traditional broadcast of digital imagery (e.g., over satellite or cable) represents another case in which it is not practical to send unique copies to each subscriber.

Thus, a need exists for a technique for uniquely marking image content that facilitates forensic tracking.

BRIEF SUMMARY OF THE PRESENT PRINCIPLES

Briefly, in accordance with one aspect of a preferred embodiment of the present principles, there is provided a method for marking image content, such as but not limited to image content in the form of a still image or a motion image sequence representing a movie or television program for example. The method commences by generating at least one film grain pattern associated with a particular recipient of the image content. The film grain pattern undergoes blending with the image content. In this way, if the image recipient distributes an unauthorized copy of the image content, such a copy will have a film grain pattern or sequence of film grain patterns or set of film grain patterns unique to that recipient to facilitate forensic tracking.

In accordance with another aspect of the present principles, there is provided a method for tracing a copy of image content to the authorized recipient of the original image content from which the copy was made. The method commences by comparing the copied image content to a version of the original image content to generate difference data. Thereafter, the difference data undergoes comparison with a number of film grain patterns to extract an identifier which can be associated a particular recipient. A match between the copied image content data and the image content received by the recipient occurs when the comparison between the difference data and the film grain pattern (or set or sequence of film grain patterns) representing the identifier exceeds a prescribed threshold.

BRIEF DESCRIPTION OF THE DRAWINGS

FIGURE 1 depicts a block schematic diagram of a first embodiment of a system for embedding into a piece of image content at least one film grain pattern specific to the recipient of that image content;
FIGURE 2 depicts a block schematic diagram of first embodiment of a system for detecting the film grain pattern embedded into the image content by the system of FIG. 1;
FIGURE 3 depicts a block schematic diagram of a second embodiment of a system for embedding into a piece of image content at least one film grain pattern specific to the recipient of that image content;
FIGURE 4 depicts a block schematic diagram of a second embodiment of a system for detecting the film grain pattern embedded into the image content by the system of FIG. 3;

FIGURE 5 depicts a block schematic diagram of a third embodiment of a system for embedding into a piece of image content at least one film grain pattern specific to the recipient of that image content;

FIGURE 6 depicts a block schematic diagram of a third embodiment of a system for detecting the film grain pattern embedded into the image content by the embodiment of FIG. 5;

FIGURE 7 depicts a time line showing the downloading protocol between a content server and an image recipient;

FIGURE 8 depicts a block schematic diagram of a first embodiment of a system for generating the comparison image content used by the systems of FIG. 1 through 7; and

FIGURE 9 depicts a block schematic diagram of a second embodiment of a system for generating the comparison image content used by the systems of FIG. 1 through 7

## DETAILED DESCRIPTION

In accordance with the present principles, image content, such as video with or without embedded audio, undergoes marking with a unique pattern. The pattern takes the form of at least one film grain pattern blended with the received image content such that the film grain pattern is specific (i.e., unique) to the receiving decoding device for that content, referred to hereinafter simply as the recipient of the content. To detect the presence of such a film grain mark in an unauthorized copy of the received image content, a comparison occurs made between the suspected unauthorized copy and a version of the original image content to generate difference data. The difference data undergoes comparison with a number of film grain patterns to extract an identifier which can be associated with a particular recipient of the original image data. If the comparison exceeds a threshold value, then a match exists between the unauthorized copy and the image content received by the recipient.

To understand better the manner in which watermark creation and detection occurs in accordance with the present principles, a brief understanding of film grain will prove useful. Motion picture films comprise silver-halide crystals dispersed in an emulsion coated in thin layers on a film base. The exposure and development of these crystals form the photographic image consisting of discrete tiny particles of silver. In color negatives, tiny blobs of dye occur on the sites where the silver crystals form following chemical removal of the silver during development of the film stock. These small specks of dye commonly bear the label 'film grain' in color film. Grain appears randomly distributed on the resulting image because of the random formation of silver crystals on the original emulsion. Within a uniformly exposed area, some crystals develop after exposure while others do not.

Recently, the H.264 Video Compression standard underwent amendment to adopt a standard Supplemental Enhancement Information (SEI) message specifying at least one film grain simulation parameter for simulating film grain within image content during the decoding using a technique recently disclosed by the assignee of the instant application. The film grain simulation technique developed by applicants' assignee simulates film grain by first filtering grain out of images before compression. The compressed image, together with a Supplemental Enhancement Information (SEI) message containing information about original grain in the image prior to compression, under go transmission to a receiving device (e.g., a set-top box, a DVD player, or a television set, for example) for decoding. The receiving device then simulates one or more film grain patterns based on the SEI message to restore the original grainy appearance of the image prior to compression.

Film grain simulation can occur using a frequency-filtering model, which constitutes a trade-off between accuracy and hardware implementation complexity. Frequency-filtering occurs on a block-by-block basis. For each 8x8 block of the decoded image, an 8x8 Gaussian random field is generated and then transformed into DCT domain. After filtering, the DCT-domain coefficients undergo a transformation back to spatial domain to form a film grain pattern. The variance of the Gaussian random variable can control the strength of the simulated film grain. The size of the grain is controlled by frequency filtering using four cut frequencies, two for horizontal and two for vertical direction.

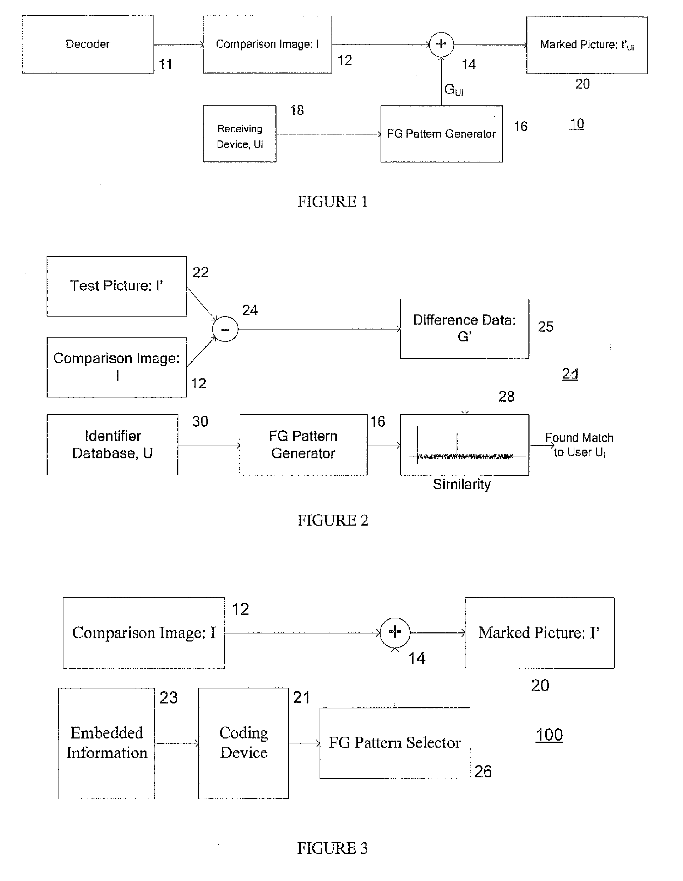

As described above, image content undergoes marking in accordance with the present principles by adding a pattern of film grain to one or more video frames dependent on an identifier associated with the recipient of image content (e.g., the receiving decode device) using a system such as the system 10 depicted in FIG. 1. To best understand how such marking occurs, let O denote the original image content, let I denote the original image content without film grain (here referred to as the comparison image), let G denote a film grain pattern which has the same size as the original picture and may be comprised of a set of smaller film grain patterns and let I' denote the image content with a film grain pattern added.

As seen in FIG. 1, a decoder 11 decodes a decoded picture, herein referred to as a comparison image 12, from a compressed image. The decoded comparison image 12 generated by a decoder 11 undergoes blending at a blending block 14 with a film grain pattern generated by a film grain pattern generator 16. The film grain pattern generator 16 serves to generate a film grain in accordance with a pseudo-random number seed. In accordance with the embodiment of FIG. 1, the film grain generator 16 establishes the initial seed in accordance with a user identification, Ui, associated with a particular receiving device, 18, such as a set-top box, DVD player, television, or other apparatus that receives compressed image content. The initial seed, which is specific to the receiving device Ui 18, or in the case of multiple device users, a specific user of that device, enables the film grain pattern generator 16 to generate at least one specific film grain pattern associated with that seed. The film grain pattern, when blended with the decoded picture, serves to forensically mark the decoded image content.

The film grain pattern generator pattern generator 16 generates film grain patterns on a block-by-block basis, using a different seed for each block. For each subsequent block, the film grain pattern generator 16 makes use of a function to determine the new seed from the seed established for the previous block. A new SEI message will reset the initial seed. Therefore, once the film grain pattern generator 16 establishes the initial seed in accordance with the identifier associated with the receiving device Ui the entire film grain pattern $G_{Ui}$ becomes set. Note that different users of the receiving device 18 can have different identifiers Ui so that the initial seed will differ for such different uses, thus enabling the for film grain pattern generator to generate specific patters, $G_{Ui}$, for each user.

The comparison image I produced by the decoder 12, when blended at the blending block 14 with the film grain pattern $G_{Ui}$ produced by the film grain pattern generator 16, creates a picture 20 that is marked with a pattern unique to the device 18, or in the case of multiple users, a specific user of that device. For ease of reference, the marked picture 20 bears the label $I'_{Ui}$ in FIG. 1 to denote that the marked picture corresponds to the comparison image I, but bears a film grain pattern generated in accordance with the unique identifier Ui.

FIGURE 2 depicts a system 21, in accordance a first preferred embodiment of the present principles for detecting the film grain pattern of a test picture 22, bearing the designation I'. By detecting the film grain pattern of the test picture 22, the system 21 can determine whether the test picture I' was replicated from the comparison image 12 received by a device, or, in the case of multiple device users, by a particular user of that device. The system 21 includes a comparator 24 that compares the test picture 22 to the comparison image 12 and generates difference data G' 25 in accordance with the difference between these pictures. This difference data G' is an estimate of a film grain pattern. An identifier database 30 contains a list of identifiers U, any one of which might be embedded in the test picture I' 22. Each data base entry corresponds to an identifier of a given receiving device, such as device 18 of FIG. 1, or in the case of multiple device users, an identifier associated with a user. Each of these identifiers is processed by the film grain generator 16 to yield a corresponding film grain pattern. A comparator 28 calculates the similarity (e.g., the correlation) between the difference data G' 25 and each of the film grain patterns generated by the film grain generator 16.

As discussed above with respect to FIG. 1, the device identifier Ui, or in the case of multiple device users, the user identifier Ui, serves to establish the initial seed for the film grain pattern. A high similarity between the extracted film grain pattern G' and a film grain pattern $G_{Ui}$ associated with a specific device identifier or user identifier indicates that the test picture I' 22 originated from the associated receiving device, or a particular user of that device. In this way, the system 21 can determine the origin of the test picture, that is, the particular device Ui, or the user of that device Ui, that replicated the test picture 22.

In some cases, the film grain simulation technique employed by the film grain pattern generator 16 of FIG. 1 may make use of a limited number of seeds, typically, 256 seeds, to reduce computation complexity, thus yielding a limited number of film grain patterns. To that end, the film grain pattern generator 16 of FIG. 1 may make use of a lookup table (not shown) to select a film grain pattern from a set of all available patterns.

FIGURE 3 depicts a block diagram of a system 100, in accordance with a second preferred embodiment of the present principles for embedding film grain pattern into a decoded picture such that the pattern represents information available at the receiving device 18 at the time of decoding. The system 100 makes use of many of the same elements as the system of FIG. 1, and therefore like reference numbers identify like elements.

The system of 100 of FIG. 3 differs from the system 10 of FIG. 1 by making use of a coding device 21 in FIG. 3 to encode information available at the decoder 23 into a sequence of symbols. The coding device 21 can enhance the recoverability by further coding the symbol sequence using an Error Correction Coding (ECC) and/or Anti-Collusion Coding (ACC) scheme. This coded symbol stream undergoes embedding into the decoded picture symbol by symbol. Each film grain block can be used to represent one symbol since the film grain pattern is added to the pictures on a block by block basis. For a High Definition (HD) resolution picture (1920 x 1080 pixels), each frame would thus have a capacity of 8100 symbols, assuming a film grain block size of 16 by 16 pixels. However, for higher reliability, each symbol should be embedded in more than one block. For example, for certain types of blocks, the film grain pattern will be all zeros because the mean of this block is too small. Therefore, groups of blocks or even an entire frame can serve to embed at least one symbol. To increase reliability, a group of frames can embed at least one symbol. In this case, if some frames are dropped, recovery of the hidden symbol can still occur.

Basically, the payload symbol controls the film grain noise pattern for a certain block. Generation of the film grain pattern representing a payload symbol can occur in one of several ways, each described hereinafter. Different uncorrelated patterns

One approach to generating the film grain pattern representing a payload symbol makes use of different uncorrelated film grain patterns. To that end, all the available random patterns undergo separation into M groups, where the payload symbol is a member of an alphabet of size M. Each group is then associated with one of the M symbols in that alphabet. In order to embed a symbol, any film grain pattern from the corresponding set is selected by the film grain selector 26. As an example, consider the case of a binary symbol taking the values 0 or 1. In this case, all available film grain patterns undergo separation into two groups, denoted as Group '0' and Group '1', with these groups having $N_0$ and $N_1$ different patterns respectively. The correlation between any two patterns selected from each group should remain very small while the auto-correlation of a pattern is 1:

$$G_i^0 * G_j^1 \approx 0, \quad G_i^0 * G_i^0 = 1, \quad G_j^1 * G_j^1 = 1 \qquad \forall i \in [1, N_0] \qquad \forall j \in [1, N_1]$$

In order to embed a bit '0', pattern selection occurs from Group '0'. To embed a bit '1', film grain noise pattern selection occurs from Group '1'. Blending of the selected film grain pattern with the block occurs as follows:

```
I' = I + G⁰    embed bit '0'
```

or

```
I' = I + G¹    embed bit '1'
```

where I is the block from the comparison image 12, I' is the corresponding block in the marked picture 20, $G^0$ denotes a block pattern from Group '0' and $G^1$ denotes a block pattern from Group '1'.

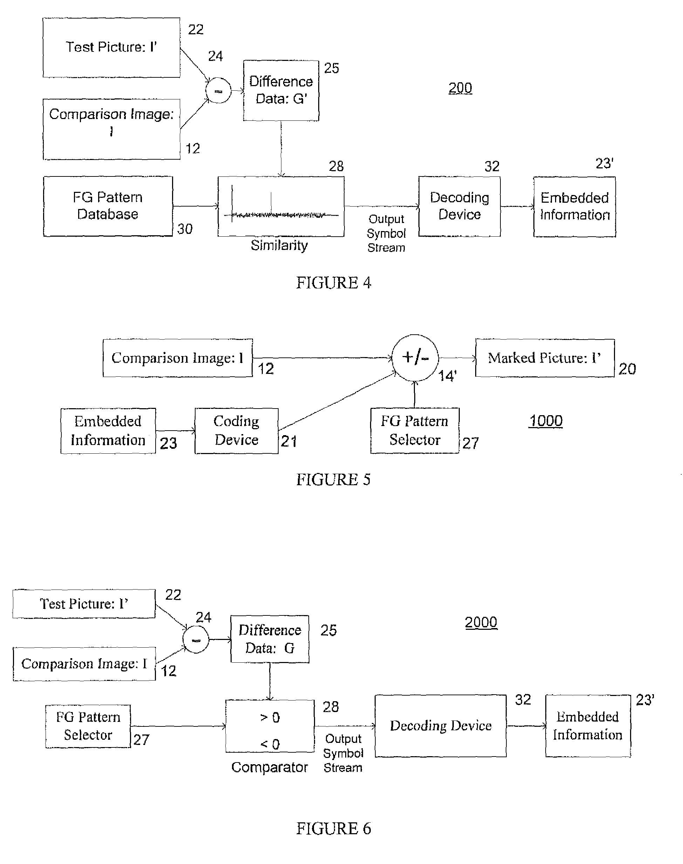

FIGURE 4 depicts a block diagram of a system 200, in accordance with a second preferred embodiment of the present principles, for detecting the film grain pattern of a test picture I' embedded by the system 100 of FIG. 3 and recovering the information embedded by the system 100. The system 200 of FIG. 4 makes use of many of the same elements as the system 21 of FIG. 2 and like reference numbers describe like elements. As with the system 21 of FIG. 1, the system 200 includes a comparator 24 that compares the test picture 22 to the comparison image 12 to generate a difference data 25. This extracted difference data 25 undergoes a division into blocks in the same manner as occurs in the blending block 14 of FIG. 1. A comparator 28 serves to correlate extracted film grain pattern with a grain pattern from a labeled database 30. In this database, each pattern is labeled with the symbol corresponding to the group to which it belongs. In the example used to describe FIG. 3, each pattern is associated with either symbol '0' or symbol '1'. The similarity measurement made by the comparator 28 will determine the pattern most likely embedded in each block of the test picture and will output the corresponding symbol. A decoding device 32 performs decoding to obtain the embedded information 23'. This embedded information 23' is a recovery of 23 in FIG. 3, the information embedded by system 100.

Same pattern different sign

Another approach to payload symbol insertion (embedding) when the symbols are binary makes use of the same pattern, but pattern addition occurs in an algebraic manner depending on the binary value of the embedded bit. Initially, the embedded information is encoded into a bit sequence. Again, the coding device can utilize ECC and/or ACC coding techniques to improve the recoverability of the embedded information. The embedding occurs on a bit-by-bit basis. However, pattern selection will be independent of the value of the current bit. Blending of the same pattern to a block will occur regardless of whether the bit to be embedded is a bit '0' or bit '1'. To embed a bit '1', the blending will be addition, whereas to embed a bit '0', the blending will be subtraction. A mathematical expression of the algebraic pattern blending appears below:

```
I' = I - Gₖ    embed bit '0'
```

or

$$I' = I + G_k \quad \text{embed bit '1'}$$

where I is the block from the comparison image, I' is the corresponding block in the marked picture, and $G_k$ denotes any available block pattern.

FIGURE 5 depicts a depicts a block diagram of a system 1000, in accordance with a third preferred embodiment of the present principles for embedding film grain pattern into a decoded picture. The system 1000 of FIG. 5 embeds at least one pattern in order to represent information available at the receiving device 18 at the time of decoding, using the "same pattern different sign" technique described above. The system 1000 of FIG. 5 employs many of the same elements as the system 100 of FIG. 3 and therefore, like reference numbers describe like elements. However, as compared to the system 100 of FIG. 3, the system 1000 of FIG. 5 differs in several respects. First, the film grain pattern selector 27 of FIG. 5 operates independently of the coding device 21, whereas the film grain pattern selector 26 of FIG. 3 serves to embed the coded symbol generated by the coding device. Secondly, the system 1000 of FIG. 5 makes use of a blending block 14' which operates to add or subtract the pattern from the film grain pattern selector 27 based on the output bit of the coding device 21 as described above. In contrast, the blending block 14 of FIGS. 1 and 3 serves only to add film grain patterns.

The operation of the system 1000 of FIG. 5 most closely follows the existing Film Grain Technology standard. In the case where the image content comprises a movie, a determination as to which film grain patterns undergo addition to a particular movie title occurs in advance for all users to make sure that every audience will have the same experience. Before the release of the movie, experts with "golden" eyes will view the movie with the film grain added. If such experts find some unpleasant artifacts, the film grain parameters undergo adjustment to create different film grain patterns for subsequent evaluation. The addition or subtraction of film grain patterns performed by the system 1000 of FIG. 5 yields the same visual effect as adding film grain to the original movie title.

FIGURE 6 depicts a system 2000, in accordance a third preferred embodiment of the present principles, for recovering the embedded information using the pattern addition/pattern subtraction model described previously. As with the detection systems 20 and 200 of FIGS. 2 and 4, the detection system 2000 of FIG. 6 employs a comparator 24 that compares the test picture 22 to the comparison image 12 to generate a difference data 25. A film grain pattern selector 27 selects the same pattern that was selected during the embedding process. This film grain pattern is then compared to the difference data 25 by a comparator 28. The comparator 28 determines whether the difference data better matches the film grain pattern or the inverse of the film grain pattern and outputs a 1 or a 0 respectively, the former suggesting that the film grain pattern was added to the comparison image during embedding and the latter suggesting that it was subtracted. The decoding device 32 of FIG. 6 can decode this value to yield the embedded information 23'.

Note that the "different uncorrelated patterns" methodology employed by the system 100 of FIG. 3 and the "same pattern different sign" methodology employed by the system 1000 of FIG. 5 are not mutually exclusive. These two approaches can be combined. If the comparison image is not available, the test picture can undergo filtering to yield a de-noised picture. Then, the de-noised picture can serve as the comparison image 12 for use by the film grain detection systems of FIGS. 2, 4, and 6

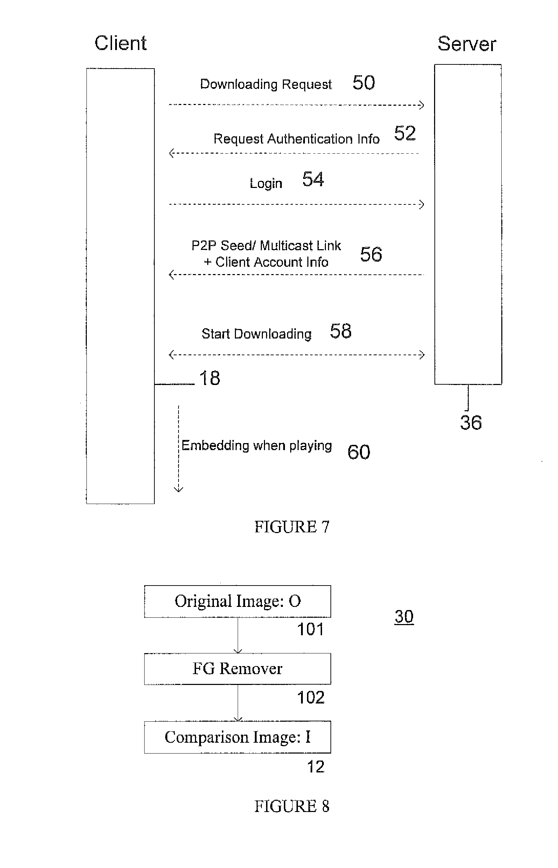

FIGURE 7 depicts a timing diagram showing the order steps in a protocol associated with downloading of content from a server 36 to a content receiving device (e.g., a client), such as receiving device 18 of FIGS. 1, 3 and 5. The downloading process commences upon receipt at the server 36 of a request by the receiving device 18 to download content (step 50). In response, the server 36 will request authentication from the receiving device (step 52), triggering the receiving device to log into the server (step 54). Assuming a successful login, the server 36 responds with Peer-to-Peer Seed/Multicast link information and client account information for receipt by the receiving device (step 56). Thereafter, downloading commences (step 58). Embedding of the unique film grain pattern(s) in the manner discussed above with respect to FIGS. 1, 3, and 5, occurs during playout.

In the data embedding systems 10, 100, 1000, of FIGS. 1, 3, and 5, respectively, and in the embedded information recovery systems 20, 200, 2000, of FIGS. 2, 4, and 6, respectively, a comparison image 12 was used. The comparison image is a version of the original image content after film grain has been removed. A typical usage of synthetic film grain is to model and remove the natural film from an original content prior to compression. The decoded content will have no film grain. This is the comparison image 12.

FIGURE 8 depicts a block schematic diagram of a system 30 in accordance with a first embodiment of the present principles for generating the comparison image content used by the systems described herein. A film grain remover 102 is used to process the original image content 101 to yield the comparison image 12. One example of a technique applied by the film grain remover is noise reduction filtering.

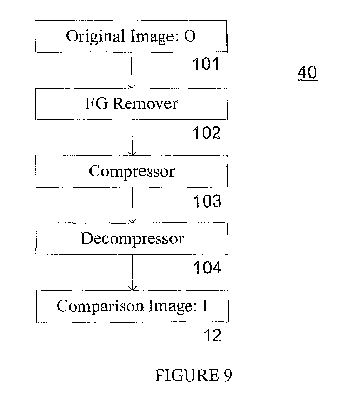

FIGURE 9 depicts a block schematic diagram of a system 40 in accordance with a second embodiment of the present principles for generating the comparison image content used by the system described herein. The system 40 of FIG. 9 makes use of many of the same elements as the system 30 of FIG. 8 and like reference numbers describe like elements. As with the system 30 of FIG. 9, the system 40 includes a film grain remover 102 to remove the film grain from the original image content 101. This is followed by a compressor 103 and a decompressor 104 which use the same compression technology and compression parameters employed in the distribution channel. In fact, the combination of film grain remover 102 and compressor 103 is typically part of a system that is used to prepare image content for distribution. A decompressor 104 applied to the compressed stream will yield the comparison image 12. The comparison image 12 created by this system 40 is better than that produced by system 30 in that it includes the compression artifacts that will be present in a test image.

The foregoing describes a technique for blending at least one specific pattern of film grain with image content to provide a mechanism for uniquely marking such content.

**Claims**

1. A method for embedding information into image content, comprising the steps of:

   coding the information into a stream of symbols;
   selecting at least one film grain pattern for each symbol; and blending the selected at least one film grain pattern with the image content.

2. The method according to claim 1 wherein the coding step includes further comprises the step of error correction coding the information stream.

3. The method according to claim 1 wherein the coding step further comprises the step of anti-collusion coding the information stream.

4. The method according to claim 1 wherein the step of selecting
   the film grain pattern depends on the coded symbols and wherein the blending step comprises one of the steps of adding or subtracting the selected film grain pattern.

5. A method of tracing copied image content to a client of an original image, comprising the steps of:

   comparing the copied image content to the original image content to generate difference data;
   correlating the difference data to a film grain pattern in the original image content; and
   matching the copied image content to the original image content when the correlation between the difference data and the identifier exceeds a prescribed threshold.

6. The method according to claim 5 wherein the identifier is associated with a particular content receiving device.

7. The method according to claim 5 wherein the identifier identifies a user of a receiving device that originally received the image content

Decoder | 11 | Comparison Image: I | 12 | $+$ | 14 | Marked Picture: I'$_{ui}$ | 20

$G_{Ui}$

Receiving Device, Ui | 18 | FG Pattern Generator | 16 | 10

FIGURE 1

Test Picture: I' | 22

$-$ | 24 | Difference Data: G' | 25

Comparison Image: I | 12

21

28

Identifier Database, U | 30 | FG Pattern Generator | 16 | Similarity | Found Match to User U$_i$

FIGURE 2

Comparison Image: I | 12 | $+$ | 14 | Marked Picture: I' | 20

Embedded Information | 23 | Coding Device | 21 | FG Pattern Selector | 26 | 100

FIGURE 3

FIGURE 4

FIGURE 5

FIGURE 6

9

**Client**                                     **Server**

Downloading Request    50
- - - - - - - - - - - - - - - - - - - - - ->

Request Authentication Info    52
<- - - - - - - - - - - - - - - - - - - - -

Login    54
- - - - - - - - - - - - - - - - - - - - - ->

P2P Seed/ Multicast Link
+ Client Account Info    56
<- - - - - - - - - - - - - - - - - - - - -

Start Downloading    58
<- - - - - - - - - - - - - - - - - - - - - ->

18

Embedding when playing    60

FIGURE 7

| Original Image: O |
|---|

101    30

| FG Remover |
|---|

102

| Comparison Image: I |
|---|

12

FIGURE 8

FIGURE 9

**EUROPEAN SEARCH REPORT**

Application Number

EP 09 17 8176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCHLOCKERMANN M ET AL: "Film grain coding in H.264/AVC" JOINT VIDEO TEAM (JVT) OF ISO/IEC MPEG & ITU-T VCEG(ISO/IEC JTC1/SC29/WG11 AND ITU-T SG16 Q6), XX, XX, 2 September 2003 (2003-09-02), pages 1-8, XP002311238 * page 1, lines 5-14 * | 1-7 | INV. H04N1/32 G06T5/00 |
| A | WO 2004/105250 A (THOMSON LICENSING SA [FR]; GOMILA CRISTINA [US]; KOBILANSKY ALEXANDER) 2 December 2004 (2004-12-02) * abstract * | 1-7 | |
| A | JP 2005 322028 A (SONY CORP) 17 November 2005 (2005-11-17) * abstract * | 5-7 | |
| A | CHRISTINA GOMILA ET AL: "SEI message for film grain encoding" JOINT VIDEO TEAM (JVT) OF ISO/IEC MPEG & ITU-T VCEG(ISO/IEC JTC1/SC29/WG11 AND ITU-T SG16 Q6), XX, XX, 23 May 2003 (2003-05-23), pages 1-14, XP002308742 * paragraph [0003] * | 1-7 | TECHNICAL FIELDS SEARCHED (IPC) G06T H04N G03G |
| A | EP 1 511 320 A (MATSUSHITA ELECTRIC IND CO LTD [JP]) 2 March 2005 (2005-03-02) * paragraph [0010] * | 1-7 | |
| A | JP 2002 196985 A (MATSUSHITA ELECTRIC IND CO LTD) 12 July 2002 (2002-07-12) * abstract * | 5-7 | |
| A | FR 2 875 358 A (EADS TELECOM SOC PAR ACTIONS S [FR]) 17 March 2006 (2006-03-17) * abstract * | 1-7 | |

The present search report has been drawn up for all claims

| Place of search | Date of completion of the search | Examiner |
|---|---|---|
| Berlin | 16 February 2010 | Waern, Gudrun |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................

& : member of the same patent family, corresponding
    document

EPO FORM 1503 03.82 (P04C01)

**EP 2 169 939 A1**

## ANNEX TO THE EUROPEAN SEARCH REPORT
## ON EUROPEAN PATENT APPLICATION NO.

EP 09 17 8176

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2010

| Patent document cited in search report | | Publication date | Patent family member(s) | | Publication date |
|---|---|---|---|---|---|
| WO 2004105250 | A | 02-12-2004 | AU | 2004240456 A1 | 02-12-2004 |
| | | | AU | 2004241535 A1 | 02-12-2004 |
| | | | BR | PI0410320 A | 23-05-2006 |
| | | | BR | PI0410383 A | 04-07-2006 |
| | | | CA | 2525937 A1 | 02-12-2004 |
| | | | CA | 2526016 A1 | 02-12-2004 |
| | | | CN | 1788281 A | 14-06-2006 |
| | | | CN | 1791891 A | 21-06-2006 |
| | | | CN | 101350891 A | 21-01-2009 |
| | | | EP | 1627359 A2 | 22-02-2006 |
| | | | EP | 1627360 A1 | 22-02-2006 |
| | | | HK | 1087232 A1 | 10-10-2008 |
| | | | JP | 2007515846 T | 14-06-2007 |
| | | | JP | 2007514336 T | 31-05-2007 |
| | | | KR | 20060015725 A | 20-02-2006 |
| | | | KR | 20050121757 A | 27-12-2005 |
| | | | MX | PA05012294 A | 31-05-2006 |
| | | | MX | PA05012295 A | 31-05-2006 |
| | | | RU | 2377652 C2 | 27-12-2009 |
| | | | WO | 2004104931 A1 | 02-12-2004 |
| | | | ZA | 200509227 A | 30-05-2007 |
| | | | ZA | 200509231 A | 28-11-2007 |
| JP 2005322028 | A | 17-11-2005 | NONE | | |
| EP 1511320 | A | 02-03-2005 | NONE | | |
| JP 2002196985 | A | 12-07-2002 | NONE | | |
| FR 2875358 | A | 17-03-2006 | CA | 2580298 A1 | 23-03-2006 |
| | | | EP | 1790139 A1 | 30-05-2007 |
| | | | WO | 2006029907 A1 | 23-03-2006 |
| | | | US | 2008043871 A1 | 21-02-2008 |

EPO FORM P0459

For more details about this annex : see Official Journal of the European Patent Office, No. 12/82

13

**EP 2 169 939 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 80152706 P